# EUROPÄISCHE PATENTSCHRIFT

(11) **EP 2 488 595 B1**
(45) Veröffentlichungstag und Bekanntmachung des Hinweises auf die Patenterteilung: **27.01.2016**
(21) Anmeldenummer: 10770717.6
(22) Anmeldetag: 13.10.2010
(51) Int. Cl.: C09J 7/02, B32B 3/30, B32B 27/08, B32B 27/18, B32B 27/32

(54) **KLEBEFÄHIGE PRODUKTE MIT EINER GEPRÄGTEN TRENNFOLIE**
ADHESIVE PRODUCTS HAVING AN EMBOSSED RELEASE FILM
PRODUITS ADHÉRENTS COMPRENANT UN FILM SÉPARATEUR GAUFRÉ

(30) Priorität: 14.10.2009 DE 102009049414
(43) Veröffentlichungstag der Anmeldung: 22.08.2012
(73) Patentinhaber: Infiana Germany GmbH & Co. KG, 91301 Forchheim (DE)
(72) Erfinder: SCHUHMANN, Michael, 90613 Grosshabersdorf (DE); KELM, Roland, 91301 Forchheim / Kersbach (DE); STARK, Kurt, 91284 Neuhaus (DE); MALZ, Andreas, 13353 Berlin (DE)
(74) Vertreter: Kutzenberger, Helga
(86) Internationale Anmeldenummer: PCT/EP2010/006243
(87) Internationale Veröffentlichungsnummer: WO 2011/054434

(56) Entgegenhaltungen:
- EP-A1- 1 186 643
- EP-A1- 1 388 582
- EP-A2- 0 345 927
- EP-A2- 0 512 845
- EP-A2- 0 947 543
- US-A- 3 501 363
- US-A1- 2005 074 573
- Uwe Wolfmeier ET AL: "Waxes" In: "Ullmann's Encyclopedia of Industrial Chemistry", 15 June 2000 (2000-06-15), Wiley-VCH Verlag GmbH & Co. KGaA, Weinheim, Germany, XP055033858, ISBN: 978-3-52-730673-2 pages 111-172, DOI: 10.1002/14356007.a28_103, * tables 21-24 *
- RALF HANSELMANN: 'Ethylen-Vinylalkohol-Copolymere' RÖMPP ONLINE VERSION E.O, [Online] 01 Juli 2007, Seite 1, XP055099844 Gefunden im Internet: <URL:https://roempp.thieme.de/roempp4.0/do/ data/RD-05-02032> [gefunden am 2014-02-03]
- WOLFGANG BEIER: 'Biologisch abbaubare Kunststoffe', [Online] 01 August 2009, DESSAU-ROßLAU, Seiten 1 - 11, XP055099841 Gefunden im Internet: <URL:http://www.umweltbundesamt.de/sites/de fault/files/medien/publikation/long/3834.pd f> [gefunden am 2014-02-03]
- Janos Hajas: "Amidwachse Dokumentkennung RD-01-01967", RÖMPP Online, Version 3.37, 1 December 2007 (2007-12-01), page 1, XP055083403, Retrieved from the Internet: URL:http://www.roempp.com [retrieved on 2013-10-10]

## Beschreibung

Die vorliegende Erfindung betrifft ein klebefähiges Produkt mit einer entfernbaren Trennfolie gemäß Anspruch 1 umfassend wenigstens eine Schicht (a) basierend auf wenigstens einem thermoplastischen Polymeren, die auf wenigstens einer ihrer Oberflächen eine Ausrüstung basierend auf wenigsten einem bestimmten Wachs als lipophileverbindung aufweist, die eine Prägestruktur wenigstens dort hat, wo die entfernbare Schutzfolie mit der klebrigen Oberfläche des Produktes in Kontakt steht und eine an die Schicht (a) angrenzende Schicht (c) basierend auf wenigstens einem bestimmten hydrophilen, thermoplastischen Polymere, wobei die Hydrophilie des thermoplastischen Polymeres der Schicht (c) höher ist als die Hydrophilie des thermoplastischen Polymeres der Schicht (a).

Trennfolien werden vielfach als abziehbare, selbstklebende Schutzfolien auf nicht klebefähigen Produkten aus unterschiedlichen Materialien, wie Edelstahl, Glas usw. (EP 1 388 582 A1) oder als abziehbare (nicht selbstklebefähige) Schutzfolien für Klebebänder oder Selbstklebeetiketten eingesetzt, um ein Verkleben dieser einseitig oder beidseitig klebenden Produkte bei der Lagerung zu verhindern und müssen sich durch eine gute Trennwirkung gegen Klebstoffe wie z.B. druckempfindliche Klebstoffe oder andere klebefähige Materialien auszeichnen.

Aus dem Stand der Technik wie z.B. aus EP 1 277 802 A1 oder EP 0 769 540 A2 sind bereits Trennfolien bekannt, die zur Erzielung ihrer Trennwirkung zumindest einseitig silikonisiert sind oder wie z. B. aus US 2005/074573 A1 hervorgeht, eine Oberfläche mit Prägestruktur aufweisen, die mit einer klebrigen Oberfläche des Produktes lösbar in Kontakt steht.

Ferner sind aus dem Stand der Technik bereits Trennfolien bekannt, deren Trägerschicht wachsartige Additive enthalten oder mit solchen beschichtet sind. So werden in DE 100 18 442 A1 wachshaltige Polyolefin-Trennfolien bzw. in EP 0 345 927 A2 wachshaltige, einschichtige Polyolefin-Trennfolien mit Mikrostruktur und in EP 1 186 643 A1 Trennfolien beschrieben, deren Trägerschicht ein Polyolefin-Wachs als Releaseschicht aufweist.

Für einige technische Anwendungen, bei denen stark klebende Materialien mit einer abziehbaren Schutzfolie ausgerüstet werden müssen, reicht die Trennwirkung der Trennfolien gemäß dem Stand der Technik nicht aus, so dass es bei der Handhabung entsprechender klebefähiger Artikel, insbesondere bei der Entfernung der Trennfolie zu Schwierigkeiten kommt, da die bekannten Trennfolien neben einer gegebenenfalls unzureichenden Trennkraft von stark klebenden Oberflächen auch nicht die dafür notwendig hohe mechanische Fertigkeit aufweisen.

Aufgabe der vorliegenden Erfindung war es daher, klebefähige Produkte mit einer entfernbaren Trennfolien auszurüsten, die sich durch eine verbesserte Trennwirkung gegen Klebstoffe und klebefähige Materialien, insbesondere Materialien mit einer großen Klebekraft auszeichnen.

Diese Aufgabe wird erfindungsgemäß durch die Bereitstellung eines mit einer entfernbaren Trenn- und/oder einer Schutzfolie versehenen, klebefähigen gemäß Anspruch 1 Produktes gelöst, wobei die Trennfolie wenigstens eine Schicht (a) basierend auf wenigstens einem thermoplastischen Polymeren umfasst, die zumindest auf einer ihrer Oberflächen eine Ausrüstung basierend auf wenigstens einem Wachs ausgewählt aus der Gruppe bestehend aus Fettsäuren, Fettalkoholen, C₇₋₃₀-Alkyl-Aminen, C₇₋₃₀-Alkenyl-Aminen, Fettsäureestern und Fettsäureamiden als lipophile Verbindungaufweist, und die zumindest in dem Ausmaß eine Prägestruktur hat, mit der sie mit der klebrigen Oberfläche des Produktes im Kontakt steht, und eine an die Schicht (a) angrenzende Schicht (c) basierend auf wenigstens einem hydrophilen, thermoplastischen Polymeren ausgewählt aus der Gruppe umfassend Ethylen-Vinylalkohol-Copolymere, zumindest teilverseifte Polyvinylacetate, Polyamide oder eine Mischung von wenigstens zwei der genannten Polymeren aufweist, wobei die Hydrophilie des thermoplastischen Polymeren der Schicht (c) höher als die Hydrophilie des thermoplastischen Polymeren der Schicht (a) ist.

Es wurde nämlich überraschend gefunden, dass durch den Einsatz einer erfindungsgemäß zum Einsatz kommende Trennfolie umfassend wenigstens eine Schicht (a) basierend auf wenigstens einem thermoplastischen Polymeren, die zumindest einseitig als Ausrüstung eine Beschichtung oder Belegung basierend auf wenigstens einem bestimmten Wachs als eine lipophile Verbindung mit zumindest einer partiellen Prägestruktur aufweist, eine Verbesserung der Trennwirkung von klebefähigen Produkten im Vergleich zu herkömmlichen Trennfolien erreicht werden kann.

Unter dem Begriff "Ausrüstung" ist im Sinne der vorliegenden Erfindung zu verstehen, dass die Schicht (a) der erfindungsgemäß zum Einsatz kommenden Trennfolie zumindest einseitig eine Beschichtung oder Belegung basierend auf wenigstens einer lipophilen Verbindung aufweist. Die Schicht (a) kann einseitig mit einer bestimmten lipophilen Verbindung beschichtet sein oder eine Belegung zumindest auf einer ihrer Oberflächen durch wenigstens eine migrierte lipophile Verbindung aufweisen. Diese so ausgerüstete Oberfläche weist zumindest partiell eine Prägestruktur auf, die gegebenenfalls durchgängig durch die Dicke der Schicht (a) oder sogar durch die Gesamtdicke der Trennfolie mit abnehmender Stärke vorliegt, je nachdem wie stark die Prägung durchgeführt wurde.

In einer bevorzugten Ausführungsform weist die Schicht (a) der Trennfolie eine einseitige Beschichtung, d. h. eine außenliegende, mit dem klebefähigen Produkt in Kontakt stehende Schicht basierend auf wenigstens einer lipophilen Verbindung als Ausrüstung auf, die wenigstens eine Prägestruktur, vorzugsweise zumindest im Ausmaß des Kontaktes mit dem klebefähigen Produkt, aufweist.

In einer anderen bevorzugten Ausführungsform weist die Schicht (a) der erfindungsgemäß zum Einsatz kommenden Trennfolie eine außenliegende, mit dem klebefähigen Produkt in Kontakt stehende Belegung basierend auf wenigstens einem bestimmten Wachs als lipophile Verbindung als Ausrüstung auf, die wenigstens eine Prägestruktur, vorzugsweise zumindest im Ausmaß des Kontaktes mit dem klebefähigen Produkt, aufweist.

In einer bevorzugten Ausführungsform der Trennfolie liegt die Prägestruktur durchgängig durch die Dicke der Schicht (a), vorzugsweise durchgängig durch die Gesamtdicke der Trennfolie, vorzugsweise mit abnehmender Stärke, vor. Vorzugsweise hat das als lipophile Verbindung zum Einsatz kommende Wachs ein Molekulargewicht von ≤ 10 000 g/mol, vorzugsweise ≤ 5 000 g/mol, besonders bevorzugt ≤ 2 000 g/mol, ganz besonders bevorzugt ≤ 1 000 g/mol.

Als lipophile Verbindung liegt zur Erzielung der erforderlichen Trennwirkung der erfindungsgemäß zum Einsatz kommenden Trennfolie ein Wachs vor.

Als Wachs wird eine Vielzahl chemisch unterschiedlicher Verbindungen bezeichnet, welche durch ihre mechanisch-physikalischen Eigenschaften als Wachs definiert werden. Zu diesen Eigenschaften zählen eine Knetbarkeit bei 20°C, eine stark temperaturabhängige Konsistenz und Löslichkeit, Polierbarkeit unter leichtem Druck, das Schmelzen oberhalb von 40°C ohne Zersetzung, das Vorhandensein einer grob- bis feinkristallinen Struktur, eine geringe Viskosität oberhalb des Schmelzpunktes, eine durchscheinende bis opake aber nicht glasartige Färbung sowie eine feste bis brüchige Härte. Gemäß der Definition der Deutschen Gesellschaft für Fettwissenschaft (DGF) ist ein Stoff nach der DGF-Einheitsmethode M-I 1 (75) kein Wachs, wenn er mehr als eine der vorstehend aufgeführten Eigenschaften nicht erfüllt. Besonders bevorzugte Wachse sind ausgewählt aus der Gruppe umfassend Fettsäuren, Fettalkohole, langekettige Amine, Fettsäureester und Fettsäureamide. In einer bevorzugten Ausführungsform weist die erfindungsgemäß zum Einsatz kommende Trennfolie als lipophile Verbindung wenigstens eine Verbindung ausgewählt aus der Gruppe umfassend Fettsäuren, vorzugsweise C₇₋₃₀-Alkyl- und C₇₋₃₀-Alkenyl-Fettsäuren, Fettalkohole, vorzugsweise C₇₋₃₀-Alkyl- und C₇₋₃₀-Alkenyl-Fettalkohole, C₇₋₃₀-Alkyl- und C₇₋₃₀-Alkenyl-Amine, Fettsäureester und Fettsäureamide, auf, deren Erweichungs- bzw. Schmelzpunkt bei Normaldruck bei mindestens 30°C, vorzugsweise mindestens 50°C, besonders bevorzugt mindestens 80°C, ganz besonders bevorzugt mindestens 100°C, insbesondere bei mindestens 120°C liegt.

Der Ausdruck "Alkyl" bzw."C₇₋₃₀-Alkyl" umfasst im Sinne der vorliegenden Erfindung C₇₋₃₀-Alkanyle, d.h. acyclische, gesättigte, aliphatische Kohlenwasserstoffreste, die verzweigt oder unverzweigt sein können, mit 7 bis 30 C-Atomen, d.h. mit 7, 8, 9, 10, 11, 12, 13, 14, 15, 16, 17, 18, 19, 20, 21, 22, 23, 24, 25, 26, 27, 28, 29 oder 30 C-Atomen. Vorzugsweise ist C₇₋₃₀-Alkyl aus der Gruppe ausgewählt, die n-Heptyl, n-Octyl, n-Nonyl, n-Decyl, Undecyl, Dodecyl, Tridecyl, Tetradecyl, Pentadecyl, Hexadecyl, Heptadecyl, Octadecyl, Nonadecyl, Eicosyl, Henicosyl, Docosyl, Tricosyl, Tetracosyl, Pentacosyl, Hexacosyl, Heptacosyl, Octacosyl, Nonacosyl und Triacontyl umfasst. Ein besonders bevorzugtes C₇₋₃₀-Alkyl ist ein C₁₁₋₂₀-Alkyl, d.h. ein C₁₁₋₂₀-Alkanyl mit 11 bis 20 C-Atomen, d.h. mit 11, 12, 13, 14, 15, 16, 17, 18, 19 oder 20 C-Atomen. Ein ganz besonders bevorzugtes C₇₋₃₀-Alkyl ist ein C₁₄₋₂₀-Alkyl, d.h. ein C₁₄₋₂₀-Alkanyl mit 14 bis 20 C-Atomen, d.h. mit 14, 15, 16, 17, 18, 10 oder 20 C-Atomen.

Der Ausdruck "Alkenyl" bzw."C₇₋₃₀-Alkenyl" umfasst im Sinne der vorliegenden Erfindung C₇₋₃₀-Alkenyle, d.h. acyclische ungesättigte aliphatische Kohlenwasserstoffreste, die verzweigt oder unverzweigt sein können, mit 7 bis 30 C-Atomen, d.h. mit 7, 8, 9, 10, 11, 12, 13, 14, 15, 16, 17, 18, 19, 20, 21, 22, 23, 24, 25, 26, 27, 28, 29 oder 30 C-Atomen. Alkenyle weisen mindestens eine, ggf. auch 2, 3, 4, 5 oder 6 C=C-Doppelbindungen auf.
Vorzugsweise ist Alkenyl aus der Gruppe ausgewählt, die n-Heptenyl, n-Octenyl, n-Nonenyl, n-Decenyl, Undecenyl, Dodecenyl, Tridecenyl, Tetradecenyl, Pentadecenyl, Hexadecenyl, Heptadecenyl, Octadecenyl, Nonadecenyl, Eicosenyl, Henicosenyl, Docosenyl, Tricosenyl, Tetracosenyl, Pentacosenyl, Hexacosenyl, Heptacosenyl, Octacosenyl, Nonacosenyl und Triacontenyl umfasst. Ein besonders bevorzugtes C₇₋₃₀-Alkenyl ist ein C₁₁₋₂₀-Alkenyl mit 11 bis 20 C-Atomen, d.h. mit 11, 12, 13, 14, 15, 16, 17, 18, 19 oder 20 C-Atomen. Ein ganz besonders bevorzugtes C₇₋₃₀-Alkenyl ist ein C₁₄₋₂₀-Alkenyl mit 14 bis 20 C-Atomen, d.h. mit 14, 15, 16, 17, 18, 19 oder 20 C-Atomen.

Unter einem "Fettsäureester "wird im Sinne dieser Erfindung zum einen ein Ester eines ein- oder mehrwertigen, d.h. z.B. eines zwei-, drei-, vier- oder fünfwertigen Alkohols verstanden, wobei wenigstens eine der Alkoholfunktionen eines solchen mehrwertigen Alkohols mit einer aliphatischen, verzweigten oder unverzweigten, gesättigten oder ungesättigten Fettsäure, vorzugsweise mit einer C₇₋₃₀-Alkyl- oder einer C₇₋₃₀-Alkenyl-Fettsäure verestert ist. Sind mehrere Alkoholfunktionen des mehrwertigen Alkohols mit Fettsäuren verestert, so können diese Alkoholfunktionen jeweils unabhängig voneinander mit unterschiedlichen Fettsäuren verestert sein. Bevorzugte mehrwertige Alkohole sind Ethylenglycol, Glycerin (Glycerol) und 1,4-Butandiol. Besonders bevorzugt sind Ethylenglycol und Glycerin. Ein Glycerinfettsäureester umfasst somit Monoglyceride, Diglyceride und Triglyceride. Es wird unter einem "Fettsäureester" im Sinne der vorliegenden Erfindung auch ein Ester einer ein- oder mehrwertigen, d.h. z.B. einer zwei-, drei-, vier- oder fünfwertigen Carbonsäure verstanden, wobei wenigstens eine der Carbonsäurefunktionen einer solchen mehrwertigen Carbonsäure mit einem aliphatischen, verzweigten oder unverzweigten, gesättigten oder ungesättigten Fettalkohol, vorzugsweise mit wenigstens einem C₇₋₃₀-Alkyl- oder wenigstens einemC₇₋₃₀-Alkenyl-Fettalkohol verestert ist. Bevorzugte Fettsäureester sind z.B. Ethylen-bis-palmitylester, Ethylen-palmityl-stearylester und Ethylen-bis-stearylester.

Unter einem "Fettsäureamid " wird im Sinne der vorliegenden Erfindung ein Amid eines ein- oder mehrwertigen, d.h. z.B. eines zwei-, drei-, vier- oder fünfwertigen Amins verstanden, wobei wenigstens eine der Aminfunktionen eines solchen mehrwertigen Amins mit einer aliphatischen, verzweigten oder unverzweigten, gesättigten oder ungesättigten Fettsäure, vorzugsweise mit einer C₇₋₃₀-Alkyl- oder einer C₇₋₃₀-Alkenyl-Fettsäure eine Amidbindung eingegangen ist. Sind mehrere Aminfunktionen des mehrwertigen Amins mit Fettsäuren zu Amidbindungen verknüpft, so können diese Aminfunktionen jeweils unabhängig voneinander mit unterschiedlichen Fettsäuren zu Amidbindungen verknüpft sein. Ein bevorzugtes mehrwertiges Amin ist z.B. Ethylendiamin. Es wird unter einem "Fettsäureamid" im Sinne der vorliegenden Erfindung auch ein Amid einer ein- oder mehrwertigen, d.h. z.B. einer zwei-, drei-, vier- oder fünfwertigen Carbonsäure verstanden, wobei wenigstens eine der Carbonsäurefunktionen einer solchen mehrwertigen Carbonsäure mit einem aliphatischen, verzweigten oder unverzweigten, gesättigten oder ungesättigten Amin, vorzugsweise mit wenigstens einem C₇₋₃₀-Alkyl- oder wenigstens einem C₇₋₃₀-Alkenyl-Amin amidiert ist. Bevorzugte Fettsäureamide sind z.B. Ethylen-bis-palmitylamid, Ethylen-palmitylstearylamid und Ethylen-bis-stearylamid. Ein besonders bevorzugtes Fettsäureamid ist Ethylen-bis-stearylamid (N,N'-Ethylen-bis-stearinsäureamid).

Die Schicht (a) der erfindungsgemäß zum Einsatz kommenden Trennfolie basiert auf wenigstens einem thermoplastischen Polymeren.

Insbesondere eignen sich zur Herstellung der Schicht (a) vorzugsweise wenigstens ein thermoplastisches Polymer ausgewählt aus der Gruppe umfassend Polyolefine, Polyamide, Polyester, Polystyrole, biologisch abbaubare Polymere wie nachstehend definiert und Copolymere aus wenigstens zwei Monomeren der genannten Polymere.

Vorzugsweise können als thermoplastische Polyolefine thermoplastische Olefin-Homo-oder Copolymere von α,ß-ungesättigten Olefinen mit 2-10 Kohlenstoffatomen wie z.B. Polyethylen (PE, insbesondere LDPE oder HDPE), Polypropylen (PP), Polybutylen (PB), Polyisobutylen (PI) oder Mischungen aus wenigstens zwei der genannten Polymere eingesetzt werden. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Bevorzugte Polyolefine zur Herstellung der Schicht (a) sind Ethylen-Homo- oder Copolymere und Propylen-Homo- oder Copolymere.

Geeignet zur Herstellung der Schicht (a) sind auch thermoplastische Homo-oder Copolymere von Styrol.

Soweit zur Herstellung der Schicht (a) Polyamide verwendet werden, sind thermoplastische aliphatische, teilaromatische oder aromatische Polyamid Homo-oder Co-polymere geeignet. Solche Polyamide sind Polyamide aus Diaminen wie aliphatischen Diaminen mit 2-10 Kohlenstoffatomen, insbesondere Hexamethylendiamin, oder aromatischen Diaminen mit 6-10 Kohlenstoffatomen, insbesondere p-Phenylendiamin und Dicarbonsäuren wie aliphatischen oder aromatischen Dicarbonsäuren mit 6-14 Kohlenstoffatomen wie z.B. Adipinsäure, Terephthalsäure oder Isoterephthalsäure. Weiterhin können die Polyamide aus Lactamen mit 4-10 Kohlenstoffatomen wie z.B. ε-Caprolactam hergestellt worden sein. Besonders geeigente Polyamide zur Herstellung der Schicht (a) sind z.B. PA 6, PA 12, PA 66, PA 6I, PA 6T und/oder Mischungen aus wenigstens zwei der genannten Polyamide.

Als Polyester zur Herstellung der Schicht (a) können thermoplastische, aliphatische, teilaromatische oder aromatische Polyester Homo-oder Copolymere eingesetzt werden. Solche Polyester leiten sich von Polyolen wie z.B. Ethylenglycol oder 1,4-Butandiol und Dicarbonsäuren oder Dicarbonsäure-Derivaten wie Adipinsäure, und/oder Terephthalsäure ab. Erfindungsgemäß können zur Herstellung der Schicht (a) als Polyester auch Polycarbonate (PC) verwendet werden. Bevorzugt eignen sich Polybutylenadipat (PBA), Polyethylenterephthalat (PET), Polybutylenterephthalat (PBT) oder die entsprechenden Co-Polymere.

"Biologisch abbaubare Polymere" im Sinne der vorliegenden Erfindung sind natürliche oder aus nachwachsenden Rohstoffen hergestellte, halbsynthetische Polymere.

In einer bevorzugten Ausführungsform eignet sich zur Herstellung der Schicht (a) wenigstens ein biologisch abbaubares Polymer ausgewählt aus der Gruppe umfassend Milchsäure-Homo- und Copolymere, vorzugsweise Polylactide, besonders bevorzugt DL-Lactid, L-Lactid und D-Lactid, Polyhydroxyalkanoate, Cellulose, Cellulose-Derivate, thermoplastische Stärke, Polyester, vorzugsweise Polycaprolactone und Copolymere aus wenigstens zwei Monomeren der genannten Polymere.

Als biologisch abbaubarer Polyester können Polyester aus Lactonen mit 4-10 Kohlenstoffatomen wie z.B. Caprolacton eingesetzt werden. Erfindungsgemäß geeignete biologisch abbaubare Polyester sind vorzugsweise Polycaprolactone oder Polylactide. Die lipophile Verbindung liegt vorzugsweise in einer Menge von ≤ 20 Gew.-%, besonders bevorzugt ≤ 15 Gew.-%, ganz besonders bevorzugt ≤ 10 Gew.-%, insbesondere ≤ 5 Gew.-%, jeweils bezogen auf das Gesamtgewicht der erfindungsgemäß zum Einsatz kommenden Trennfolie, vor. In einer bevorzugten Ausführungsform weist die erfindungsgemäß zum Einsatz kommende Trennfolie als Trennausrüstung keine silikonisierte Releaseschicht auf.

Die Schicht (a) der erfindungsgemäß zum Einsatz kommenden Trennfolie kann eine Schichtdicke von 2 µm bis 200 µm, vorzugsweise von 4 µm bis 150 µm, besonders bevorzugt von 5 µm bis 100 µm, ganz besonders bevorzugt von 10 µm bis 80 µm, insbesondere von 15 µm bis 70 µm aufweisen

In einer bevorzugten Ausführungsform kann die erfindungsgemäß zum Einsatz kommenden Trennfolie zwei oder drei Schichten (a) aufweisen, von denen zumindest die mit dem klebefähigen Produkt in Kontakt stehende Schicht eine Ausrüstung basierend auf wenigstens einem Wachs als eine lipophile Verbindung aufweist, wobei zumindest diese Ausrüstung, gegebenenfalls durchgehend die gesamte Trennfolie, eine Prägestruktur aufweist.

Die erfindungsgemäß zum Einsatz kommende Trennfolie weist einen wenigstens zweischichtigen Verbund umfassend wenigstens eine Schicht (a) und wenigstens eine an die Schicht (a) angrenzende Schicht (c) basierend auf wenigstens einem hydrophilen thermoplastischen Polymeren auf, wobei die Hydrophilie des thermoplastischen Polymeren der Schicht (c) höher ist als die Hydrophilie des thermoplastischen Polymeren der Schicht (a). Die Schicht (c) basiert auf wenigstens einem Ethylen-Vinylalkohol-Copolymer, wenigstens einem zumindest teilverseiften Polyvinylacetat, wenigstens einem Polyamid oder einer Mischung von wenigstens zwei der genannten Polymeren. Vorzugsweise weist die Schicht (a) des Verbunds eine Belegung basierend auf wenigstens einem Wachs als eine lipophile Verbindung auf, wobei die Belegung vorzugsweise nur auf der Oberfläche der Schicht (a), und nicht auf der Oberfläche der Schicht (c) vorliegt.

Vorteilhafterweise wird diese praktisch einseitige Dotierung und/oder Belegung der Schicht (a) und das damit bewirkte leichte Trennen der Oberfläche der erfindungsgemäß zum Einsatz kommenden Trennfolie durch die an die Schicht (a) angrenzende Schicht (c) bzw. deren Hydrophilie gesteuert, die die Dotierung mit dem Wachs als lipophile Verbindung innerhalb der Schicht (a) vorzugsweise nicht in die Schicht (c) bzw. deren Oberfläche migrieren lässt.

Vorzugsweise liegt das Wachs als lipophile Verbindung der erfindungsgemäß zum Einsatz kommenden Trennfolie umfassend wenigstens eine Schicht (a) oder einen wenigstens zweischichtigen Verbund aus wenigstens einer Schicht (a) und wenigstens einer an die Schicht (a) angrenzenden Schicht (c) in einer Menge von ≤ 20 Gew.-%, besonders bevorzugt 15 Gew.-%, ganz besonders bevorzugt ≤ 10 Gew.-%, insbesondere ≤ 5 Gew.-%, jeweils bezogen auf das Gesamtgewicht der Trennfolie, vor.

Die zur Herstellung der Schicht (c) geeigneten Ethylen-Vinylalkohol-Copolymere (EVOH) werden durch eine im Wesentlichen vollständige Hydrolyse von entsprechenden ethylenhaltigen Polyvinylacetaten (EVAc) erhalten. Diese vollverseiften, ethylenhaltigen Polyvinylacetate weisen einen Verseifungsgrad ≥ 98 % und einem Ethylen-Anteil von 0,01-80 mol-%, vorzugsweise von 1-50 mol-% auf.

Die Schicht (c) kann auch auf wenigstens einem zumindest teilverseiften Polyvinylacetat basieren, welches vorzugsweise einen Verseifungsgrad von ≥ 70 % bis < 98 % aufweist. Die Schicht (c) kann auch wenigstens einem Polyvinylalkohol basieren, der durch im Wesentlichen vollständige Hydrolyse von Polyvinylacetaten gewonnen wurde und als vollverseiftes Polyvinylacetat einen Verseifungsgrad ≥ 98 % aufweist.

Zur Herstellung der Schicht (c) kann auch wenigstens ein Polyamid eingesetzt werden, wobei die selbe Art von Polyamiden verwendet werden können, welche auch zur Herstellung der Schicht (a) eingesetzt werden können, wobei jedoch die Hydrophilie des Polyamids der Schicht (c) höher sein muss als die Hydrophilie des Polyamids der Schicht (a).

Zur Herstellung der Schicht(en) (a) und (c) der erfindungsgemäß zum Einsatz kommenden Trennfolie können jeweils dieselben oder unterschiedliche Additive ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Weichmacher, Abstandshalter, Füllstoffe, Peel-Additive, Siegel-Additive, eingesetzt werden, soweit sie nicht in ihrer Wirkung mit den zum Einsatz kommenden Wachsen interferieren.

Die Schichten (a) und (c) der Trennfolie können wenigstens 0,01-30 Gew.-%, vorzugsweise wenigstens 0,1-20 Gew.-%, jeweils bezogen auf das Gesamtgewicht einer einzelnen Schicht wie z.B. der Schicht (a), wenigstens eines der vorstehend genannten Additive enthalten.

Die Schicht (a) und/oder (c) der erfindungsgemäß zum Einsatz kommenden Trennfolie können einer Oberflächenbehandlung wie z.B. einer Corona-Behandlung, einer Plasma-Behandlung, einer Säure Behandlung, einer Laugen- Behandlung und/oder einer Flamm Behandlung unterworfen werden. Besonders bevorzugt ist eine Corona-Behandlung der Schicht (a) und/oder (c).

Wenigstens das mit dem klebefähigen Produkt in Kontakt stehende Areal der Oberfläche der Schicht (a) weist eine Ausrüstung mit Prägestruktur auf, besonders bevorzugt die gesamte Oberfläche der Schicht (a).

Die Prägestruktur der erfindungsgemäß zum Einsatz kommenden Trennfolie beruht vorzugsweise auf einem wiederkehrenden und/oder regelmäßig angeordneten Muster. Bei der Prägestruktur kann es sich dabei um eine durchgehende Prägestruktur wie z.B. eine durchgehende Rillenstruktur oder um mehrere vorzugsweise wiederkehrende Einzelprägestrukturen handeln.

Vorzugsweise beruht jede Prägestruktur auf einer Vielzahl von vorzugsweise wiederkehrenden Einzelprägestrukturen. Diese jeweiligen Einzelprägestrukturen können vorzugsweise auf einer Rillenstruktur basieren, welche mehr oder weniger stark ausgeprägte Stege (Prägerergebungen) aufweist, durch welche die Prägehöhe der Prägestruktur definiert wird. Entsprechend der jeweiligen Geometrie der Stege einer vorzugsweise wiederkehrenden Einzelprägestruktur können sich in der Aufsicht eine Vielzahl jeweils unterschiedlicher, vorzugsweise wiederkehrender, Einzelprägestrukturen ergeben wie z.B. vorzugsweise schlangenlinienförmige, zackenförmige, hexagonale, diamantenförmige, rautenförmige, parallelogrammförmig, wabenförmige, kreisförmige, punktförmige, sternförmige, leinenförmige, netzförmige, mehreckige, vorzugsweise dreieckige, viereckige, besonders bevorzugt rechteckige und quadratische, fünfeckige, sechseckige, siebeneckige und achteckige, drahtförmige, ellipsenförmige, ovale und gitterförmig gestaltete Muster, wobei sich auch wenigstens zwei Muster überlagern können. Die Stege können jeweils vorzugsweise eine Länge von bis zu einem Zentimeter aufweisen, besonders bevorzugt ist eine Länge von 0,001 mm bis 10 mm. Der Anteil der Stege an der Gesamtlänge der Rillenstruktur beträgt vorzugsweise ≤ 75%, besonders bevorzugt von 5% bis 60% und besonders bevorzugt von 10% bis 50%. Vorzugsweise sind die Stege in gleichmäßigen oder alternierenden wiederkehrenden Abständen angeordnet. Die Stege der Einzelprägestrukturen können auch vorzugsweise eine Krümmung, d.h. eine konvexe und/oder oder konkave Struktur aufweisen.

Diese Prägestruktur zeichnet sich dadurch aus, dass vorzugsweise deren als Kontaktstellen zu der abzudeckenden, klebrigen oder klebefähigen Oberfläche des zu schützenden Gegenstandes bzw. Produktes vorgesehenen Prägeerhebungen der Prägestruktur vorzugsweise ≤ 75%, besonders bevorzugt ≤ 50%, bezogen auf die gesamte geprägte Ausrüstungsfläche der Schicht (a), betragen.

Vorzugsweise ist die vorzugsweise einheitliche Prägehöhe der Schicht (a) der erfindungsgemäß zum Einsatz kommenden Trennfolie ≥ 5 µm, vorzugsweise ≤ 10 µm, besonders bevorzugt ≥ 20 µm.

Die Prägehöhe der Prägestruktur der erfindungsgemäß zum Einsatz kommende Trennfolie wird gemäß DIN 53370 1006 durch eine mechanische Abtastung der Oberfläche bestimmt. Dabei wird die Prägehöhe an mindestens 10 Stellen in einer Linie gleichmäßig über die Bahnbreite der Probe verteilt gemessen, wobei darauf geachtet werden muss, dass das Abtastgerät die Prägestruktur der Schicht (a) der Trennfolie nicht zusammendrückt.

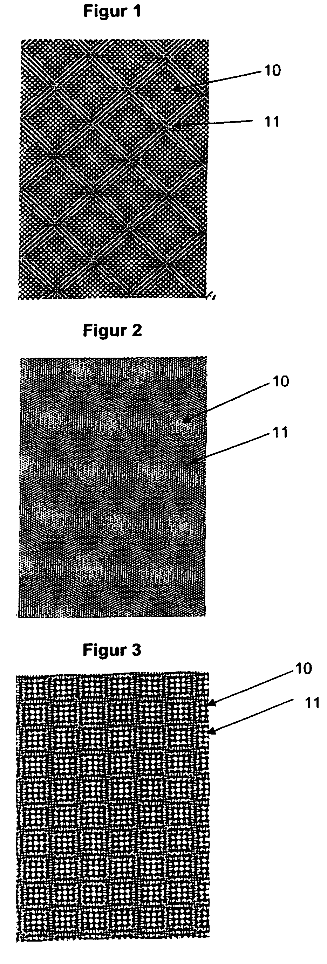

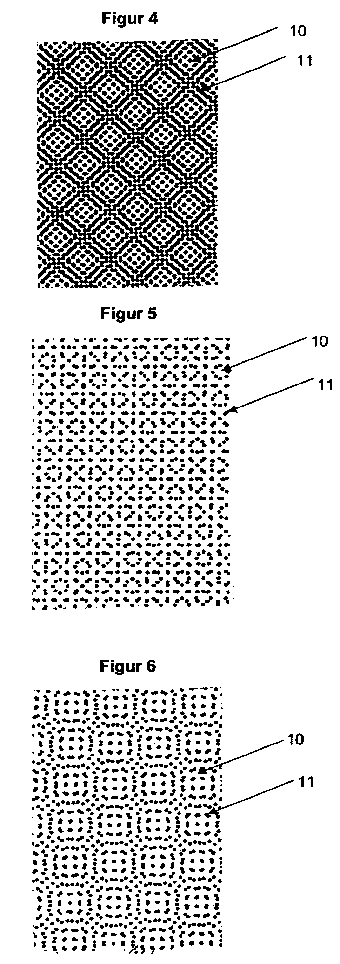

In einer anderen bevorzugten Ausführungsform der erfindungsgemäß zum Einsatz kommenden Trennfolie beträgt die vorzugsweise einheitliche Prägehöhe der Schicht (a) 5-200 µm, vorzugsweise 10-100 µm, besonders bevorzugt 20-80 µm. Als repräsentative Prägestrukturen der erfindungsgemäß zum Einsatz kommenden Trennfolien sind beispielhaft Prägestrukturen der Ausrüstung der Schicht (a) in den Figuren 1 bis 6 dargestellt und nachstehend näher erläutert.

Die Figuren 1 bis 6 zeigen schematische Darstellungen von Prägestrukturen der Ausrüstung der erfindungsgemäß zum Einsatz kommenden Trennfolien. Der Fachmann erkennt, dass diese schematischen Darstellungen lediglich einen Ausschnitt aus der gesamten Prägestruktur der Ausrüstung der Schicht (a) der Trennfolie oder ggf. der durchgängig geprägten gesamten Trennfolie darstellen und zudem nicht dem tatsächlichen Maßstab der Prägestruktur entsprechen müssen. Die Ausschnitte der Prägestrukturen gemäß den Figuren 1 bis 6 beruhen jeweils auf einem wiederkehrenden und regelmäßig angeordneten Muster. Die Prägeerhebungen der Ausschnitte der Prägestrukturen sind in den Figuren 1 bis 6 jeweils hell dargestellt und mit dem Bezugszeichen 10 versehen. Die Prägetiefen, d.h. die durch Prägeerhebungen unterbrochenen Rillen der Prägestruktur sind jeweils dunkel dargestellt und mit dem Bezugszeichen 11 versehen.
Figur 1 zeigt einen Ausschnitt einer Prägestruktur mit wiederkehrenden, regelmäßig angeordneten, rautenförmigen Einzelprägestrukturen.
Figur 2 zeigt einen Ausschnitt einer Prägestruktur mit wiederkehrenden, regelmäßig angeordneten Einzelprägestrukturen in Form von Parallelogrammen.
Figur 3 zeigt einen Ausschnitt einer Prägestruktur mit wiederkehrenden, regelmäßig angeordneten, quadratischen Einzelprägestrukturen.
Figur 4 zeigt einen Ausschnitt einer Prägestruktur mit wiederkehrenden, regelmäßig angeordneten, rautenförmigen Einzelprägestrukturen.
Figur 5 zeigt einen Ausschnitt einer Prägestruktur mit wiederkehrenden, regelmäßig angeordneten, punkt-, kreis- und dreieckförmigen Einzelprägestrukturen. Figur 6 zeigt einen Ausschnitt einer Prägestruktur mit wiederkehrenden, regelmäßig angeordneten, punkt- und kreisförmigen Einzelprägestrukturen.

In einer bevorzugten Ausführungsform weist die erfindungsgemäß zum Einsatz kommende Trennfolie eine asymmetrische Prägestruktur auf, d.h. eine Prägestruktur, welche durchgängig durch die Gesamtdicke der Trennfolie vorliegt und sowohl die Oberseite als auch die Unterseite der Trennfolie mit einer Prägung versieht, so dass diese nicht mehr eben sind, wobei das Ausmaß der Prägung jedoch unterschiedlich stark auf den beiden Oberflächen der Trennfolie ist. Im Folgenden wird als Folienoberseite die Seite der Trennfolie bezeichnet, auf die das Prägewerkzeug einwirkt oder eingewirkt hat. Die Folienunterseite der Trennfolie weist demzufolge eine schwächere Prägung auf.

Zur Herstellung der erfindungsgemäß zum Einsatz kommenden Trennfolie umfassend die Schicht (a), wird eine Mischung aus wenigstens einem thermoplastischen Polymer und wenigstens einem Wachs als migrationsfähige, lipophile Verbindung zur Schicht (a) verarbeitet und diese ggf. nach Lagerung mit einer Prägestruktur versehen oder es wird wenigstens ein vorstehend genanntes thermoplastisches Polymer zur Schicht (a) verarbeitet, diese mit wenigstens einem Wachs als lipophile Verbindung beschichtet und ggf. nach Lagerung mit einer Prägestruktur versehen. Vorzugsweise erfolgt die Prägung direkt im Anschluss an die Herstellung der Schicht (a) bzw. direkt im Anschluss an deren Beschichtung mit dem Wachs als lipophile Verbindung ohne vorherige Lagerung.

Prinzipiell kann die Herstellung der Schichten a und (c) der erfindungsgemäß zum Einsatz kommenden Trennfolie nach beliebigen bekannten Herstellungsverfahren wie z.B. durch Extrusion oder durch Co-Extrusion erfolgen.

Dabei können sowohl einzelne als auch sämtliche Schichten (a) und (c) der Trennfolie durch Extrusion, insbesondere durch Blasfolien-Extrusion und/oder Flachfolien-Extrusion (Cast-Extrusion), oder Co-Extrusion, insbesondere Blasfolien-Co-Extrusion und/oder Flachfolien-Co-Extrusion (Cast-Co-Extrusion) gebildet werden. Dabei ist zu beachten, dass im Fall einer Dotierung der Schicht (a) oder weiteren Schichten mit dem erfindungsgemäß zum Einsatz kommendenWachs als lipophile Verbindung und/oder mit anderen Additiven, diese vorzugsweise durch Abmischen, ggf. als Masterbatch, mit der oder den Polymer-Komponente(n) der jeweiligen Schicht zur Verarbeitung eingesetzt werden. Dieses Abmischen kann in Granulat/Pulver- oder Granulat/Granulat-Form trocken erfolgen. Es ist aber auch möglich, das Wachs als lipophile Verbindung und/oder das Additiv dem oder den aufgeschmolzenen Polymer-Komponente(n) der jeweiligen Schicht zuzugeben, vorzugsweise durch Zudosierung in einem für die Extrusion der jeweiligen Schicht verwendeten Extruder.

Mit der vorzugsweise asymmetrischen Prägung kann die erfindungsgemäß zum Einsatz kommende Trennfolie einseitig oder durch die Gesamtdicke durchgängig, gemäß einem Prägeverfahren, ggf. nach Beschichtung mit dem Wachs als lipophile Verbindung, mit Hilfe eines Struktur- oder Prägekalanders umfassend ein Rasterauftragswerk, vorzugsweise ein Rasterwalzwerk, in-line oder off-line versehen werden. Dieser Kalander verfügt vorzugsweise in Höhenrichtung übereinander in einem bestimmten Abstand angeordnete, gegensinnig drehende Walzen, wobei die mit einer asymmetrischen Prägestruktur zu versehene Trennfolie den Walzen zugeführt und durch den sich ausbildenden Walzenspalt hindurchgeführt wird und die Spaltweite variabel einstellbar ist. Das Rasterwalzwerk umfasst dabei vorzugsweise eine erste Walze mit einer vergleichsweise harten Oberfläche, besonders bevorzugt eine Stahlwalze, und eine zweite Walze, die eine vergleichsweise weniger harte Oberfläche aufweist und vorzugsweise aus einem elastischen Material, besonders bevorzugt aus Gummi oder Hartgummi gebildet ist.

Die härtere der beiden Walzen trägt in Negativform das in die Trennfolie einzuprägende Muster (Prägewalze). Die dieser Walze gegenüberliegende zweite Walze dient vorzugsweise als Gegendruckwalze oder Anpresswalze und drückt die mit einem Struktur- oder Prägemuster zu versehende Trennfolie gegen die erste Prägewalze. Die Prägung der Trennfolie erfolgt vorzugsweise bei erhöhter Temperatur, daher durchläuft die Trennfolie bei der off-line Prägung zunächst ein Heizwalzwerk, danach erfolgt ggf. eine Bestrahlung mit Infrarot-Licht, bevor der vorstehend beschriebene eigentliche Prägevorgang erfolgt. Nach der Prägung durchläuft die Trennfolie ggf. zur Abkühlung ein Kühlwalzwerk. Die Erstellung der Negativform der einzuprägenden Struktur erfolgt nach den dem Fachmann bekannten und üblichen Verfahren, wobei je nach Struktur und Materialien spezifische Verfahren besonders vorteilhaft sein können. Grundsätzlich können die Strukturen auf der Prägewalze entweder eine durchgehende Struktur haben oder aber als unterbrochene Struktur (Abfolge von Einzelprägestrukturen) ausgebildet sein, wobei auch eine Kombination beider Strukturen möglich ist. Die jeweiligen Strukturen auf der Prägewalze können die unterschiedlichsten geometrischen Formen aufweisen, je nach beabsichtigter asymmetrischer Struktur der Trennfolie.

Die geprägte Trennfolie eignet sich als entfernbare Trenn- und/oder Schutzfolien für klebrige Produkte jeder Art.

Unter einem klebrigen oder klebefähigen Produkt wird ein End- oder Zwischenprodukt verstanden, das zumindest auf einer seiner Oberflächen zumindest in Teilbereichen ggf. druckempfindlich, d. h. ggf. durch Andrücken, bei 25°C vorzugsweise auf einem Untergrund klebt oder an sich bei 25°C klebrig ist.

Klebstoffe zur Herstellung von klebrigen Produkten sind dem Fachmann bekannt, wie z. B. druckempfindliche Klebstoffe. Desweiteren kann das mit einer vorstehend beschriebenen, entfernbaren Trenn- und/oder Schutzfolie zu versehende Produkt auf Grund seiner Zusammensetzung und/oder Viskosität an sich bereits klebrig sein, so dass es zur Weiterverarbeitung oder Endanwendung mit einer Trennfolie zu versehen ist.

Ein Gegenstand der vorliegenden Erfindung ist daher ein klebefähiges Produkt ausgewählt aus der Gruppe umfassend Selbstklebeetiketten, Klebebänder, Aufkleber, klebefähige pharmazeutische Produkte, vorzugsweise Pflaster oder andere klebefähige Wundabdeckungen, jeweils mit der vorstehend beschriebenen, entfernbaren Trennfolie versehen.

Ein weiterer Gegenstand der vorliegenden Erfindung ist auch ein klebefähiges Produkt ausgewählt aus der Gruppe umfassend ggf. geformte, klebrige Harze, klebrige Fasern, klebrige Gewebe oder andere klebrige Werkstoffe, deren klebrige Flächen mit der vorstehend beschriebenen, entfernbaren Trennfolie versehen sind.

Ein weiterer Gegenstand der vorliegenden Erfindung ist ein klebefähiges Sanitär- oder Hygieneprodukt, zumindest dessen klebrige Flächen mit einer vorstehend beschriebenen Trennfolie als entfernbare Trenn- oder Schutz-Folie versehen sind.

Ein weiterer Gegenstand der vorliegenden Erfindung ist die Verwendung der vorstehend beschriebenen Trennfolie als entfernbare Trenn- oder Schutz- Folie vorzugsweise für Selbstklebeetiketten, Klebebänder und Aufkleber.

Weiterhin kann die vorstehend beschriebene Trennfolie auch als entfernbare Trenn- oder Schutz- Folie für klebefähige pharmazeutische Produkte, vorzugsweise für Pflaster oder andere klebefähige Wundabdeckungen, oder für klebefähige Sanitär- oder Hygieneprodukte verwendet werden.

Ferner kann die vorstehend beschriebene Trennfolie auch als entfernbare Trenn- oder Schutz-Folie bei der Verarbeitung von ggf. geformten, klebrigen Harzen, Fasern, Gewebe oder anderen Werkstoffen verwendet werden.

### Bestimmung der Trennkraft (Trennwirkung)

Die Trennwirkung der erfindungsgemäß zum Einsatz kommenden Trennfolie gegen einen Klebstoff wird durch die Trennkraft in [cN/cm] angegeben, die zum Trennen, d.h. Entfernen der Trennfolie vom Klebstoff erforderlich ist.

Auf die stärker geprägte Oberfläche einer Probe der erfindungsgemäß zum Einsatz kommenden Trennfolie oder einer Vergleichsfolie, für die jeweils die Trennkraft ermittelt werden soll, wird hierbei über ihre gesamte Breite blasenfrei ein Testklebeband aufgeklebt. Die Probe wird so zugeschnitten, dass längsseitig vom Testklebeband jeweils ein Rand von 1 cm an Trennfolie verbleibt, der nicht mit dem Testklebeband versehen ist. Die gesamte Breite der Probe beträgt 4,5 cm (1 cm + 2,5 cm + 1 cm). Die Probe wird in mehrere jeweils ca. 30 cm-lange Streifen geschnitten und die Proben-Streifen15 Minuten bei Raumtemperatur gelagert. Anschließend wird der Probenstreifen mittels eines Doppelklebebands in eine Metallschiene (350 x 40 mm) eines elektronischen Zerreißgeräts eingebracht, die mit einer unteren Spannklemme fixiert wird. Ein steifer, ca. 400 mm langer Folienstreifen wird am Testklebeband des Probenstreifens befestigt und mittels einer oberen Spannklemme im Zerreißgerät fixiert. Das Testklebeband wird nun unter einem Winkel von 180° mit einer Abzugsgeschwindigkeit von 1800 mm/min abgezogen und zur Ermittlung der Trennkraft ein Kraftdiagramm aufgezeichnet. Es wird jeweils ein Mittelwert aus 3 Messungen ermittelt.

Als stärker geprägte Oberfläche einer erfindungsgemäß zum Einsatz kommenden Trennfolie wird die nur einseitig geprägte Oberfläche der Trennfolie, bzw. die geprägte Oberfläche einer Trennfolie mit asymmetrischer Prägestruktur mit der in Summe geringsten Kontaktfläche mit der Klebefläche des Produkts bezeichnet.

Die nachfolgenden Vergleichsbeispiele dienen der Erläuterung der Erfindung, sind jedoch nicht einschränkend auszulegen.

### I. Chemische Charakterisierung der eingesetzten Rohstoffe:

Alle nachfolgenden %-Angaben sind jeweils Gew.-%.PP:
Polypropylen Homopolymer
   - PE:: Mischung aus LDPE (Lupolen 2420 F) (80%) und HDPE (Hostalen GF 9045 F) (20%)
   - LV1:: Constab PE-SA 270 (basierend auf Ethylen-bis-stearylamid (EBS))

### II. Herstellung der Trennfolien

Die Trennfolien der Vergleichsbeispiele **V1a-V1b** und **B1** bestehen jeweils aus drei Schichten und weisen eine Gesamtschichtdicke von jeweils 60 µm auf. Alle Trennfolien der vorstehenden Vergleichsbeispiele wurden jeweils durch Blasfolien-Co-Extrusion hergestellt. Die Trennfolien der Vergleichsbeispiele **V1a** und **B1** wurden anschließend einseitig geprägt.

### III. Vergleichsbeispiele und Bestimmung der Trennkraft

Alle nachfolgenden %-Angaben sind jeweils Gew.-%. Die Bestimmung der Trennkraft erfolgte nach der vorstehend beschriebenen Methode.

### Vergleichsbeispiele 1a (V1a) und 1b (V1b) sowie B1 (nicht erfindungsgemäß):

| | **V1a** | **V1b** | **B1** |
|---|---|---|---|
| Schichtaufbau | Schicht (1) (20 µm): 100% PP; | Schicht (1) (20µm): 96% PP; und 4% LV1; | Schicht (1) (entspricht Schicht (a)) (20 µm): 96% PP und 4% LV1; |
| | Schicht (2) (20 µm): 100% PP; | Schicht (2) (20 µm): 100% PP; | Schicht (2) (20 µm): 100% PP; |
| | Schicht (3) (20 µm): 100% PP | Schicht (3) (20 µm): 96% PP und 4% LV1 | Schicht (3) (20 µm): 96% PP und 4% LV1 |
| einseitige Prägestruktur | ja | nein (glatt) | ja |
| Trennfolie enthält lipophile Verbindung | nein | ja | ja |
| Trennkraft (cN/cm) | 67 | 203 | 44 |

## Patentansprüche

1. Ein mit einer entfernbaren Trenn- und/oder Schutzfolie versehenes, klebefähiges Produkt, **dadurch gekennzeichnet,**
**dass** die Trenn- und/oder Schutzfolie wenigstens eine Schicht (a) basierend auf wenigstens einem thermoplastischen Polymeren umfasst, die zumindest auf einer ihrer Oberflächen als Ausrüstung eine Schicht oder Belegung basierend auf wenigstens einem Wachs ausgewählt aus der Gruppe bestehend aus Fettsäuren, Fettalkoholen, C₇₋₃₀-Alkyl-Aminen, C₇₋₃₀-Alkenyl-Aminen, Fettsäureestern und Fettsäureamiden als lipophile Verbindung aufweist, die zumindest in dem Ausmaß eine Prägestruktur hat, mit der sie mit der klebrigen Oberfläche des Produktes im Kontakt steht, und
eine an die Schicht (a) angrenzende Schicht (c) basierend auf wenigstens einem hydrophilen, thermoplastischen Polymeren ausgewählt aus der Gruppe umfassend Ethylen-Vinylalkohol-Copolymere, zumindest teilverseifte Polyvinylacetate, Polyamide oder eine Mischung von wenigstens zwei der genannten Polymeren aufweist, wobei die Hydrophilie des thermoplastischen Polymeren der Schicht (c) höher als die Hydrophilie des thermoplastischen Polymeren der Schicht (a) ist.

2. Ein Produkt nach Anspruch 1, **dadurch gekennzeichnet, dass** als klebefähiges Produkt Selbstklebeetiketten, Klebebänder, Aufkleber, klebefähige pharmazeutische Produkte, vorzugsweise Pflaster oder andere klebefähige Wundabdeckungen, klebefähiges Sanitär- und Hygieneprodukte vorliegen.

3. Ein Produkt nach Anspruch 1, **dadurch gekennzeichnet, dass** als klebefähiges Produkt gegebenenfalls geformte, klebrige Harze, klebrige Fasern, klebrige Gewebe oder andere klebrige Werkstoffe jeweils zur Weiterverarbeitung vorliegen.

4. Ein Produkt nach einem der vorstehenden Ansprüche, **dadurch gekennzeichnet, dass** als Ausrüstung der Schicht (a) eine Schicht oder Belegung mit einer zumindest partiellen Prägestruktur vorliegt.

5. Ein Produkt nach einem der vorstehenden Ansprüche, **dadurch gekennzeichnet, dass** das Wachs ein Molekulargewicht von ≤ 10.000 g/mol, vorzugsweise ≤ 5.000 g/mol, besonders bevorzugt ≤ 2.000 g/mol hat.

6. Ein Produkt nach einem der vorstehenden Ansprüche, **dadurch gekennzeichnet, dass** die geprägte Ausrüstung der Schicht (a) eine vorzugsweise einheitliche Prägehöhe von ≥ 5 µm, vorzugsweise von ≥ 10 µm, besonders bevorzugt von ≥ 20 µm aufweist.

7. Ein Produkt nach einem der vorstehenden Ansprüche, **dadurch gekennzeichnet, dass** die gesamte Oberfläche der Schicht (a), eine Ausrüstung mit Prägestruktur aufweist.

8. Ein Produkt nach Anspruch 7, **dadurch gekennzeichnet, dass** die als Kontaktstellen wirkenden Prägeerhebungen der Prägestruktur ≤ 75 %, vorzugsweise ≤ 50 % der gesamten geprägten Ausrüstungsfläche der Schicht (a) betragen.

9. Ein Produkt nach einem der vorstehenden Ansprüche, **dadurch gekennzeichnet, dass** die Prägestruktur der Ausrüstung der Schicht (a) ein regelmäßig angeordnetes Muster aufweist.

10. Ein Produkt nach einem der vorstehenden Ansprüche, **dadurch gekennzeichnet, dass** die Schicht (a) der Trennfolie auf wenigstens einem thermoplastischen Polymer ausgewählt aus der Gruppe umfassend Polyolefine, Polyamide, Polyester, Polystyrole, biologisch abbaubare, natürliche, vorzugsweise aus nachwachsenden Rohstoffen hergestellte, halbsynthetische oder synthetische Polymere, und Copolymere aus wenigstens zwei Monomeren der genannten Polymere basiert.

11. Ein Produkt nach Anspruch 10, **dadurch gekennzeichnet, dass** die Schicht (a) der Trennfolie auf wenigstens einem Olefin Homo- oder Copolymeren, vorzugsweise ausgewählt aus der Gruppe umfassen Ethylen-Homo- oder Copolymere und Propylen-Homo- oder - Copolymere, oder auf wenigstens einem Polyamid Homo- oder - Copolymeren, oder
auf wenigstens einem biologisch abbaubaren Polymeren ausgewählt aus der Gruppe umfassend Milchsäure-Homo- und -Copolymere, vorzugsweise Polylactide, besonders bevorzugt DL-Lactid und D-Lactid, Polyhydroxyalkanoate, Cellulose, Cellulose-Derivate, thermoplastische Stärke, Polyester, vorzugsweise Polycaprolactone, und Copolymere aus wenigstens zwei Monomeren der genannten Polymeren basiert.

12. Ein Produkt nach einem der vorstehenden Ansprüche, **dadurch gekennzeichnet, dass** die Prägestruktur durchgängig durch die gesamte Dicke der Schicht (a) der Trennfolie, vorzugsweise durchgängig durch die Gesamtdicke der Trennfolie, vorzugsweise in abnehmender Stärke, gegeben ist.

13. Ein Produkt nach einem der vorstehenden Ansprüche, **dadurch gekennzeichnet, dass** die Trennfolie keine silikonisierte Releaseschicht aufweist.

14. Eine Verwendung einer Trenn- und/oder Schutzfolie gemäß Ansprüchen 1, 4 bis 13 als entfernbare Trenn- und/oder Schutzfolie für klebefähige Produkte, vorzugsweise für Selbstklebeetiketten, Klebebänder, Aufkleber, klebefähige pharmazeutische Produkte, besonders bevorzugt Pflaster und andere klebefähige Wundabdeckungen, oder klebefähige Sanitär- und Hygieneprodukte, oder
als entfernbare Trenn- und/oder Schutzfolie bei der Verarbeitung von klebrigen Harzen, Fasern, Gewebe und anderen Wirkstoffen.

## Claims

1. An adhesive product provided with a removable release film and/or protective film, **characterized in that**
the release film and/or protective film comprises at least one layer (a) based on at least one thermoplastic polymer and having at least on one of its surfaces as finishing a layer or covering based on at least one wax selected from the group consisting of fatty acids, fatty alcohols, C₇₋₃₀ alkyl-amines, C₇₋₃₀ alkenyl-amines, fatty acid esters and fatty acid amides as lipophilic compound, and having an embossed structure at least to the extent that it is in contact with the tacky surface of the product, and
a layer (c) which adjacent to the layer (a) and is based on at least one hydrophilic, thermoplastic polymer selected from the group encompassing ethylene-vinyl alcohol copolymers, at least partly hydrolysed polyvinyl acetates, polyamides or a mixture of at least two of the stated polymers, the hydrophilicity of the thermoplastic polymer of the layer (c) being higher than the hydrophilicity of the thermoplastic polymer of the layer (a).

2. A product according to Claim 1, **characterized in that** as adhesive product self-adhesive labels, adhesive tapes, stickers, adhesive pharmaceutical products, preferably plasters or other adhesive wound coverings, adhesive sanitary products and hygiene products are present.

3. A product according to Claim 1, **characterized in that** as adhesive product optionally shaped, tacky resins, tacky fibres, tacky fabrics or other tacky materials in each case for further processing are present.

4. A product according to any of the preceding claims, **characterized in that** a layer or covering having an at least partial embossed structure is present as finishing of the layer (a).

5. A product according to any of the preceding claims, **characterized in that** the wax has a molecular weight of ≤ 10 000 g/mol, preferably ≤ 5000 g/mol, more preferably ≤ 2000 g/mol.

6. A product according to any of the preceding claims, **characterized in that** the embossed finishing of the layer (a) has a preferably uniform embossment height of ≥ 5 µm, preferably of ≥ 10 µm, more preferably of ≥ 20 µm.

7. A product according to any of the preceding claims, **characterized in that** the entire surface of the layer (a) has a finishing with embossed structure.

8. A product according to Claim 7, **characterized in that** the embossment heights of the embossed structure that act as contact points amount to ≤ 75%, preferably ≤ 50%, of the total embossed finishing area of the layer (a).

9. A product according to any of the preceding claims, **characterized in that** the embossed structure of the finishing of the layer (a) has a regularly arranged pattern.

10. A product according to any of the preceding claims, **characterized in that** the layer (a) of the release film is based on at least one thermoplastic polymer selected from the group comprising polyolefins, polyamides, polyesters, polystyrenes, biodegradable, natural, semisynthetic or synthetic polymers, preferably produced from renewable raw materials, and copolymers of at least two monomers of the stated polymers.

11. A product according to Claim 10, **characterized in that** the layer (a) of the release film is based on at least one olefin homopolymer or copolymer, preferably selected from the group comprising ethylene homopolymers or copolymers and propylene homopolymers or copolymers, or on at least one polyamide homopolymer or copolymer, or
on at least one biodegradable polymer selected from the group comprising lactic acid homopolymers and copolymers, preferably polylactides, more preferably DL-lactide and D-lactide, polyhydroxyalkanoates, cellulose, cellulose derivatives, thermoplastic starch, polyesters preferably polycaprolactones, and copolymers of at least two monomers of the mentioned polymers.

12. A product according to any of the preceding claims, **characterized in that** the embossed structure exists continuous throughout the thickness of the layer (a) of the release film, preferably continuous through the total thickness of the release film, preferably to a decreasing extent.

13. A product according to any of the preceding claims, **characterized in that** the release film has no siliconized release layer.

14. A use of a release film and/or protective film according to Claims 1 and 4 to 13 as removable release film and/or protective film for adhesive products, preferably for self-adhesive labels, adhesive tapes, stickers, adhesive pharmaceutical products, more preferably plasters and other adhesive wound coverings, or adhesive sanitary products and hygiene products, or
as removable release film and/or protective film in the processing of tacky resins, fibres, fabrics and other materials.

## Revendications

1. Produit adhésif muni d'une feuille de séparation et/ou de protection amovible, **caractérisé en ce que**
la feuille de séparation et/ou de protection comprend au moins une couche (a) à base d'au moins un polymère thermoplastique, qui comprend au moins sur une de ses surfaces en tant que traitement une couche ou un revêtement à base d'au moins une cire choisie dans le groupe constitué par les acides gras, les alcools gras, les alkylamines en C₇-C₃₀, les alcénylamines en C₇-C₃₀, les esters d'acides gras et les amides d'acides gras en tant que composé lipophile, qui a une structure gaufrée au moins dans la zone avec laquelle elle est en contact avec la surface adhésive du produit, et
une couche (c) adjacente à la couche (a), à base d'au moins un polymère thermoplastique hydrophile choisi dans le groupe comprenant les copolymères d'éthylènealcool vinylique, les polyacétates de vinyle au moins partiellement saponifiés, les polyamides ou un mélange d'au moins deux des polymères mentionnés, l'hydrophilie du polymère thermoplastique de la couche (c) étant supérieure à l'hydrophilie du polymère thermoplastique de la couche (a).

2. Produit selon la revendication 1, **caractérisé en ce que** des étiquettes auto-adhésives, des bandes adhésives, des autocollants, des produits pharmaceutiques adhésifs, de préférence des pansements ou d'autres couvertures de lésions adhésives, des produits sanitaires et d'hygiène adhésifs sont présents en tant que produit adhésif.

3. Produit selon la revendication 1, **caractérisé en ce que** des résines adhésives, éventuellement façonnées, des fibres adhésives, des tissus adhésifs ou d'autres matériaux adhésifs, à chaque fois destinés à une transformation, sont présents en tant que produit adhésif.

4. Produit selon l'une quelconque des revendications précédentes, **caractérisé en ce qu'**une couche ou un revêtement comprenant une structure gaufrée au moins partielle est présent en tant que traitement de la couche (a).

5. Produit selon l'une quelconque des revendications précédentes, **caractérisé en ce que** la cire présente un poids moléculaire ≤ 10 000 g/mol, de préférence ≤ 5000 g/mol, de manière particulièrement préférée ≤ 2000 g/mol.

6. Produit selon l'une quelconque des revendications précédentes, **caractérisé en ce que** le traitement gaufré de la couche (a) présente une hauteur de gaufrage de préférence uniforme ≥ 5 µm, de préférence ≥ 10 µm, de manière particulièrement préférée ≥ 20 µm.

7. Produit selon l'une quelconque des revendications précédentes, **caractérisé en ce que** l'ensemble de la surface de la couche (a) comprend un traitement à structure gaufrée.

8. Produit selon la revendication 7, **caractérisé en ce que** les élévations de gaufrage agissant en tant qu'emplacements de contact de la structure gaufrée représentent ≤ 75 %, de préférence ≤ 50 % de l'ensemble de la surface de traitement gaufrée de la couche (a).

9. Produit selon l'une quelconque des revendications précédentes, **caractérisé en ce que** la structure gaufrée du traitement de la couche (a) présente un motif agencé régulièrement.

10. Produit selon l'une quelconque des revendications précédentes, **caractérisé en ce que** la couche (a) de la feuille de séparation est à base d'au moins un polymère thermoplastique choisi dans le groupe comprenant les polyoléfines, les polyamides, les polyesters, les polystyrènes, les polymères biodégradables naturels, de préférence fabriqués à partir de matières premières renouvelables, semi-synthétiques ou synthétiques, et les copolymères d'au moins deux monomères des polymères mentionnés.

11. Produit selon la revendication 10, **caractérisé en ce que** la couche (a) de la feuille de séparation est à base d'au moins un homo- ou copolymère d'oléfine, de préférence choisi dans le groupe comprenant les homo-ou copolymères d'éthylène et les homo- ou copolymères de propylène, ou à base d'au moins un homo- ou copolymère de polyamide, ou à base d'au moins un polymère biodégradable choisi dans le groupe comprenant les homo- et copolymères de l'acide lactique, de préférence les polylactides, de manière particulièrement préférée le DL-lactide et le D-lactide, les polyhydroxyalcanoates, la cellulose, les dérivés de cellulose, l'amidon thermoplastique, les polyesters, de préférence les polycaprolactones, et les copolymères d'au moins deux monomères des polymères mentionnés.

12. Produit selon l'une quelconque des revendications précédentes, **caractérisé en ce que** la structure gaufrée est continue sur l'ensemble de l'épaisseur de la couche (a) de la feuille de séparation, de préférence continue sur l'ensemble de l'épaisseur de la feuille de séparation, de préférence en une taille décroissante.

13. Produit selon l'une quelconque des revendications précédentes, **caractérisé en ce que** la feuille de séparation ne comprend pas de couche de séparation siliconisée.

14. Utilisation d'une feuille de séparation et/ou de protection selon les revendications 1, 4 à 13 en tant que feuille de séparation et/ou de protection amovible pour produits adhésifs, de préférence pour étiquettes auto-adhésives, bandes adhésives, autocollants, produits pharmaceutiques adhésifs, de manière particulièrement préférée pansements ou autres couvertures de lésions adhésives, ou produits sanitaires et d'hygiène adhésifs, ou
en tant que feuille de séparation et/ou de protection amovible lors de la transformation de résines adhésives, de fibres, de tissus et d'autres matériaux.
